(19) Europäisches Patentamt
European Patent Office
Office européen des brevets

(11) Veröffentlichungsnummer: **0 392 252**
**A2**

(12) # EUROPÄISCHE PATENTANMELDUNG

(21) Anmeldenummer: **90105751.3**

(22) Anmeldetag: **27.03.90**

(51) Int. Cl.[5]: **C08G 64/06, C08G 63/64, C08G 63/185**

(30) Priorität: **08.04.89 DE 3911558**

(43) Veröffentlichungstag der Anmeldung:
**17.10.90 Patentblatt 90/42**

(84) Benannte Vertragsstaaten:
**DE FR GB IT**

(71) Anmelder: **BAYER AG**

**D-5090 Leverkusen 1 Bayerwerk(DE)**

(72) Erfinder: **Tacke, Peter, Dr.**
**Brandenburger Strasse 12**
**D-4150 Krefeld(DE)**
Erfinder: **Grigo, Ulrich, Dr.**
**Michelsheide 9**
**D-4152 Kempen 3(DE)**
Erfinder: **Nouvertné, Werner, Dr.**
**Burgstrasse 17b**
**D-4150 Krefeld(DE)**
Erfinder: **Freitag, Dieter, Dr.**
**Hasenheide 10**
**D-4150 Krefeld(DE)**
Erfinder: **Idel, Karsten-Josef, Dr.**
**Am Schwarzkamp 38**
**D-4150 Krefeld(DE)**
Erfinder: **Westeppe, Uwe, Dr.**
**Vogelskamp 72**
**D-4072 Mettmann(DE)**

(54) **Brandwidrige Polycarbonate und Polyester.**

(57) Mit Additiven und/oder Comonomeren brandwidrig ausgerüstete aromatische Polycarbonate, Polyestercarbonate und Polyester auf Basis von Dihydroxydiphenylcycloalkanen der Formel

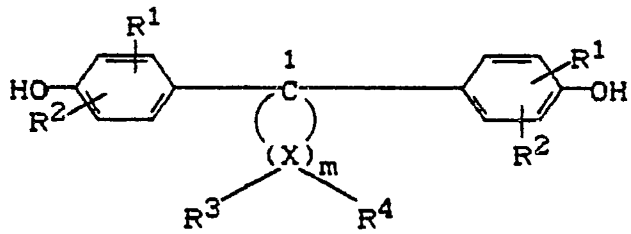

(I),

worin
$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$- $C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$ für jedes X individuell wählbar, unabhängig voneinander Wasserstoff oder $C_1$-$C_6$-Alkyl
und
X Kohlenstoff bedeuten,
mit der Maßgabe, daß an mindestens einem Atom X $R^3$ und $R^4$ gleichzeitig Alkyl bedeuten.

EP 0 392 252 A2

## Brandwidrige Polycarbonate und Polyester

Gegenstand der Erfindung sind brandwidrig ausgerüstete aromatische Polycarbonate, aromatische Polyestercarbonate und aromatische Polyester auf Basis von Dihydroxydiphenylcycloalkanen der allgemeinen Formel I

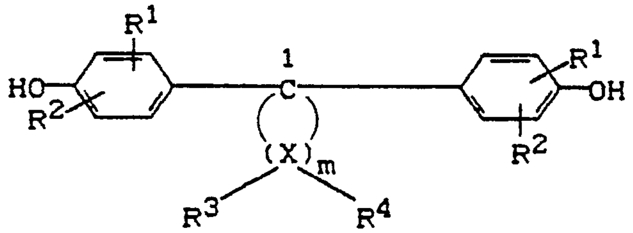

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem diphenyl-substituierten C-Atom (C-1) sind bevorzugt nicht dialkylsubstituiert, dagegen ist die Alkyldisubstitution in $\beta$-Stellung zu C-1 bevorzugt.

Die Dihydroxydiphenylcycloalkane der Formel I und ihre Herstellung durch Kondensation entsprechender Ketone und Phenole sowie entsprechende Polycarbonate und deren Herstellung sind Gegenstand der Deutschen Patentanmeldung P 3 832 396 und dort beschrieben.

Gegenstand dieser Erfindung ist die Brandschutzausrüstung von Polymeren, die aus den Dihydroxydiphenylcycloalkanen der Formel I entstanden sind. Es sind dies die Polycarbonate der deutschen Patentanmeldung P 3 832 396, d.h. Polycarbonate, deren Basis ganz oder teilweise die Dihydroxydiphenylcycloalkane der Formel I sind, aber auch von rein aromatischen Polyestern und Polyestercarbonaten auf der Basis dieser Dihydroxydiphenylcycloalkane. Die Säurekomponente in den Polyestern und Polyethercarbonaten (hier neben Kohlensäure) sind aromatische Dicarbonsäuren (einschließlich Hydroxycarbonsäuren), die einen oder mehrere aromatische Ringe enthalten.

Als Beispiele sind u.a. die Phthalsäuren, Diphenyldicarbonsäuren, Diphenyletherdicarbonsäure, Naphthalindicarbonsäuren zu nennen. Bevorzugt sind Polyester und Polyestercarbonate auf Basis Iso- und Terephthalsäure und deren Gemischen.

Bevorzugt sind solche Polycarbonate, Polyester und Polyestercarbonate in denen mindestens ein Teil, d.h. mindestens 5 Gew.-% der Dihydroxydiphenylcycloalkanreste von der Verbindung der Formel II abgeleitet sind:

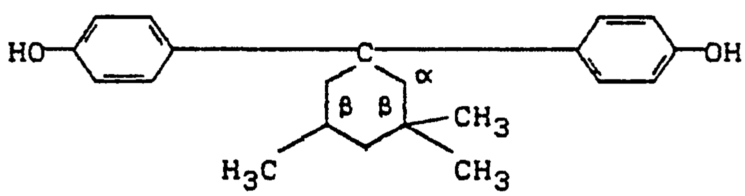

II

Herstellungsverfahren für aromatische Polycarbonate, Polyestercarbonate und Polyester sind generell bekannt und beispielsweise in Kunststoffhandbuch, Band VIII, Carl Hanser Verlag 1972, EP-A 36 080, DE-OS 2 940 024, DE-OS 1 495 302, EP-A 28 030 beschrieben.

Die erfindungsgemäß verwendeten Brandschutzmittel sind ebenfalls bekannt. Sie werden den Polycarbonaten, Polyestern oder Polyestercarbonaten entweder als Additive zugesetzt oder als Comonomere in die Polymerenkette mit eingebaut.

Polycarbonate, Polyester und Polyestercarbonate auf Basis der Dihydroxydiphenylcycloalkane der Formel I werden im folgenden kollektiv als Polymere-A benannt.

Als Brandschutzadditive kommen in Betracht:

1. Alkali-, Erdalkali- und Ammoniumsalze von aliphatischen und aromatischen Sulfonsäuren, Carbonsäuren und Phosphonsäuren. Diese können in mannigfacher Weise substituiert sein, z.B durch F, Cl, Br, Alkyl. Solche salzartigen Brandschutzmittel können auch oligomer und polymer sein.
Salzartige Brandschutzmittel sind u.a in den DE-OS
1694640, 1930257, 2049358, 2212987, 2149311, 2253072, 2703710, 2458527, 2458968, 2460786, 2460787, 2460788, 2460935, 2460937, 2460944, 2460945, 2460946, 2461063, 2461077, 2461144, 2461145, 2461146, 2643256, 2644114, 2645415, 2646120, 2647271, 2648128, 2648131, 2653327, 2744015, 2744016, 2744017, 2744018, 2745592, 2948871, 2948439, 3002122.
beschrieben.

2. Organische Halogenverbindungen, gegebenenfalls in Kombination mit Synergisten, z.B. halogenierte Aromaten. Solche Substanzen sind u.a. beschrieben in:
DE-OS 2631756, JA 51-119059, DE-OS 3342636, EP-A 31959, DE-OS 3010375, 2631756.

3. Halogenierte Phthalimide, Phthalimidsulfonate gemäß
DE-OS 2703710, 3203905, 3322057, 3337857, 3023818.

4. Salze von halogenhaltigen Komplexsäuren, z.B. Kryolith, Salze der Tetrafluoroborsäure, der Fluorkieselsäure, beschrieben ua. in DE-OS 2149311, 3023818.

5. Teilweise oder ganz fluorierte Polyolefine, z.B. beschrieben in DE-OS 2535262, 2915563, 2948439, 3023818.

6. Sulfonamide, Disulfonamide und Salze davon: EP-A 71125, 14322, WO 86/4911.

7. Elementarer Schwefel, roter Phosphor: DE-OS 2435508, 2355211.

8. Ferrocen oder dessen Derivate: DE-OS 2644437.

9. Diphenylsulfon gemäß DE-OS 2129204.

10. Nickel-Salze gemäß DE-OS 1918216.

11. Polyphenylensulfid gemäß DE-OS 2503336, EP-A 87038.

12. Alkali- und Erdalkali- sowie Zinksalze von Salzsäure, Schwefelsäure, Phosphorsäure, Salpetersäure, Schwefelwasserstoff, Borsäure sowie auch saure Salze dieser Säuren gemäß WO 87/542, US-PS 4408005, EP-A 174684.

13. Siloxane gemäß DE-OS 2535261.

Als Comonomere, die dem Brandschutz dienen können, sind geeignet:

1. Chloriertes und bromiertes Bisphenol A sowie 4,4′-Dihydroxy-diphenylsulfid (vgl. EP-A 31958, 61060).

2. Polysiloxane gemäß DE-OS 3334782.

3. Dihydroxy-diphenylsulfone gemäß US-PS 3912688.

4. Sulfoanilid-Endgruppen erzeugende Monomere gemäß EP-A 82383.

Die Brandschutz-Maßnahmen können einzeln oder gemeinsam zur Anwendung kommen.

Die Brandschutz-Additive können einzeln oder zu mehreren gemeinsam vorzugsweise in Extrudern oder Knetern in die Polymere A eingearbeitet werden. In vielen Fällen können die Brandschutzadditve den Polymeren-A schon während ihrer Herstellung oder auch schon den Ausgangsstoffen zugesetzt werden. Den Brandschutzadditiven können auch Lösungen der Polymere-A zugegeben und die Lösungsmittel dann abgedampft werden. Die Brandschutzadditive werden bevorzugt in Mengen von 0,001 bis 50 Gew.-%, bezogen auf Polymere A zugegeben, die Brandschutz-Comonomeren bevorzugt in Mengen von 0,1 bis 50 Mol-%. einpolymerisiert.

## Beispiele

### Beispiel A

3104 g (10 Mol) des Diphenols der Formel (II), 1600 g (40 Mol) NaOH werden unter Inertgas in 30 l Wasser unter Rühren gelost. Dann fügt man eine Losung von 18,8 g (2 Mol-%) Phenol in 30 l

Methylenchlorid zu. In die gut gerührte Losung werden bei pH 13 bis 14 und 21 bis 25 °C 1500 g (ca. 15 Mol) Phosgen eingeleitet. Danach werden 10 ml N-Ethylpiperidin zugegeben und noch 45 min gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigt eine relative Lösungsviskosität $\eta_{rel}$ von 1,279, gemessen an einer Lösung von 0,5 g Polycarbonat in 100 ml $CH_2Cl_2$-Lösung bei 23 °C (in den folgenden Beispielen wird $\eta_{rel}$ auf die gleiche Weise bestimmt).

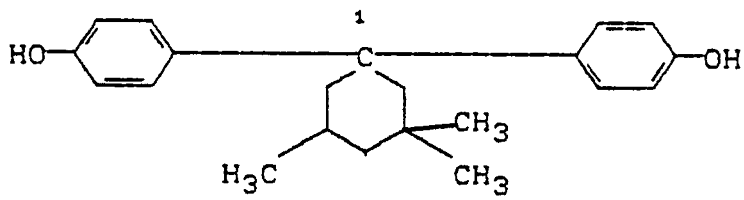

II

Beispiel B

684 g (3 Mol) Bisphenol A (2,2-Bis-(4-hydroxyphenyl)propan, 2170 g (7 Mol) des Diphenols der Formel (II), 1600 g (40 Mol) NaOH werden unter Inertgas unter Rühren in 30 l Wasser gelöst. Dann fügt man eine Lösung von 18,8 g (2 Mol-%) Phenol in 30 l Methylenchlorid zu. In die gut gerührte Losung werden bei pH 13 bis 14 und 21 bis 25 °C 1500 g (ca. 15 Mol) Phosgen eingeleitet. Danach werden 10 ml N-Ethylpiperidin zugegeben und noch 45 min gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigt eine relative Lösungsviskosität $\eta_{rel}$ von 1,314.

Beispiel C

Analog Beispiel B wurde eine Mischung aus 1140 g (5 Mol) Bisphenol A und 1550 g (5 Mol) des Diphenols der Formel (II) zum Polycarbonat umgesetzt. Es besaß $\eta_{rel}$ von 1,298.

Beispiel D

Analog Beispiel B wurde eine Mischung aus 1596 g (7 Mol) Bisphenol A und 930 g (3 Mol) des Diphenols der Formel (II) zu Polycarbonat verarbeitet. Es zeigte $\eta_{rel}$ von 1,327.

Beispiel E

2483 g (8 Mol) Diphenol der Formel (II) und 1280 g NaOH (32 Mol) wurden unter $N_2$ und unter Rühren in 30 l Wasser gelöst, als Kettenabbrecher 15 g Phenol (2 Mol-%), als Katalysator 10 ml N-Ethylpiperidin zugegeben und die Lösung mit 25 l Methylenchlorid versetzt Unter kräftigem Rühren wurde innerhalb 30 min eine Losung aus je 812 g Iso- und Terephthalsäuredichlorid (je 4 Mol) in 5 l Methylenchlorid kontinuierlich zulaufen gelassen, dann noch 45 min nachgerührt, der pH-Wert bei ca. 13 gehalten. Die Aufarbeitung des Ansatzes erfolgt wie bei Beispiel A beschrieben. Der erhaltene aromatische Polyester besaß $\eta_{rel}$ von 1,323.

Beispiel F

Analog Beispiel E wurde eine Mischung aus 1240 g (4 Mol) Diphenol der Formel (II) und 913 (4 Mol) Bisphenol A verarbeitet. Der erhaltene aromatische Polyester zeigte $\eta_{rel}$ von 1,298.

Beispiel G

3104 g (10 Mol) des Diphenols der Formel (II), 1600 g (40 Mol) NaOH und 18,8 g (2 Mol-%) Phenol wurden unter $N_2$ unter Rühren in 30 l Wasser gelost, dann 10 ml N-Ethylpiperidin sowie 25 l Methylenchorid zugegeben. Unter kräftigem Rühren erfolgte dann die Zugabe einer Lösung aus je 507,5 g (je 2,5 Mol) Iso- und Terephthalsäuredichlorid in 5 l Methylenchlorid innerhalb 30 min.

Es schloß sich die Einleitung von 750 g (7,5 Mol) Phosgen innerhalb 30 min an. Die Nachrührzeit betrug 45 min. Der pH-Wert wurde mit NaOH bei ca. 13 gehalten. Die Aufarbeitung erfolgte wie in Beipsiel 1 beschrieben. Das erhaltene Polyestercarbonat hatte $\eta_{rel}$ von 1,323.

Beispiel H

Analog Beispiel G wurde eine Mischung aus 1140 g (5 Mol) Bisphenol A und 1550 g (5 Mol) des Diphenols der Formel (II) zum Polyestercarbonat verarbeitet. Es besaß $\eta_{rel}$ 1,312.

Beispiel I

Im Beispiel A wurden 10 Mol-% des Diphenols der Formel (II) durch 3,3′,5,5′-Tetrabrom-bisphenol A ersetzt. Das erhaltene Polycarbonat hatte $\eta_{rel}$ 1,293.

Beispiel K

Im Beispiel A wurden 30 Mol-% des Diphenols der Formel (II) durch 4,4′-Dihydroxy-diphenylsulfon ersetzt. Das erhaltene Polycarbonat besaß $\eta_{rel}$ 1,285.

Die Ergebnisse der Brandprüfungen der mit Brandschutzadditiven ausgerüsteten Polymeren A sind in Tabelle 1 zusammengestellt. Die Brandschutzadditive wurden in die Polymere-A in einem Doppelwellenextruder ZSK 32 der Firma Werner & Pfleiderer eingearbeitet.

Das Brandverhalten wurde anhand des $O_2$-Index gemäß ASTM-D 2863-70 beurteilt. Für diese Untersuchungen wurden Prüfstäbe der Abmessungen 80 x 6 x 3 mm durch Spritzgießen hergestellt.

| Beispiel | Polymer A aus Beispiel | Brandschutzadditiv | Menge % | $O_2$-Index, % |
|---|---|---|---|---|
| 1* | A | - | - | 24 |
| 2* | B | - | - | 24,2 |
| 3* | C | - | - | 25,3 |
| 4* | D | - | - | 25,7 |
| 5* | E | - | - | 25,1 |
| 6* | F | - | - | 25,5 |
| 7* | G | - | - | 25,4 |
| 8* | H | - | - | 24,3 |
| 9 | I | - | - | 29,7 |
| 10 | K | - | - | 27,8 |
| 11 | A | K-p-Toluolsulfonat | 0,2 | 28,6 |
| 12 | B | " | 0,2 | 28,3 |
| 13 | C | " | 0,2 | 30,1 |
| 14 | D | " | 0,2 | 32,5 |
| 15 | E | " | 0,2 | 29,4 |
| 16 | F | " | 0,2 | 29,9 |
| 17 | G | " | 0,2 | 29,6 |
| 18 | H | " | 0,2 | 28,9 |

| Beispiel | Polymer A aus Beispiel | Brandschutzadditiv | Menge | $O_2$-Index, % |
|---|---|---|---|---|
| 19 | I | K-p-Toluolsulfonat | 0,2 | 33,9 |
| 20 | K | " | 0,2 | 30,2 |
| 21 | A | Perfluor-n-butan-K-sulfonat | " | 29 |
| 22 | E | " | " | 31 |
| 23 | A | $CF_3-CO_2-Ca-O_2C-CF_3$ | " | 29,2 |
| 24 | G | " | " | 29,5 |
| 25 | A | 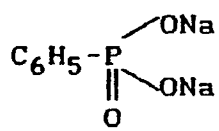 | " | 28,9 |
| 26 | F | " | " | 29,3 |
| 27 | A | 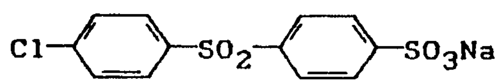 | " | 30,8 |
| 28 | C | " | " | 31,5 |
| 29 | A | Decabromdiphenyl | 5 | 29,1 |
| 30 | B | " | 5 | 29,7 |

| Beispiel | Polymer A aus Beispiel | Brandschutzadditiv | Menge | $O_2$-Index, % |
|---|---|---|---|---|
| 31 | A | Decabromdiphenyl + $Sb_2O_3$ | 5 + 2 | 31,2 |
| 32 | C | 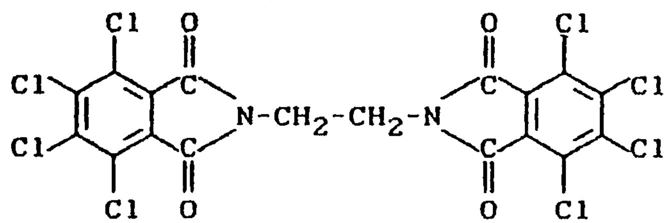 | 3 | 30,1 |
| 33 | D | | 3 | 30,5 |
| 34 | A | $Na_3AlF_6$ | 0,2 | 28,8 |
| 35 | C | " | 0,2 | 30,2 |
| 36 | C | " + Polytetrafluorethylen wie Beispiel 37 | 0,2 + 0,1 | 33,7 |
| 37 | C | Polytetrafluorethylen, Hostaflon 1740 der Hoechst AG | 0,2 | 27,8 |
| 38 | A | " | 0,2 | 26,5 |
| 39 | A | 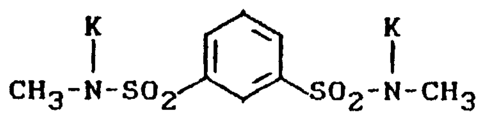 | 0,4 | 29,7 |

| Beispiel | Polymer A aus Beispiel | Brandschutzadditiv | Menge | $O_2$-Index, % |
|---|---|---|---|---|
| 40 | F | " | 0,4 | 31,2 |
| 41 | A | Schwefel | 5 | 30,6 |
| 42 | G | " | 5 | 31,3 |
| 43 | A | roter Phosphor, mittlere Teilchen-ø 35 µm | 5 | 34,8 |
| 44 | D | " | 5 | 35,4 |
| 45 | A | Ferrocen, mittlere Teilchen-ø 28 µm | 0,1 | 27,1 |
| 46 | E | " | 0,1 | 28,9 |
| 47 | A | Diphenylsulfon | 3 | 26,6 |
| 48 | A | Ni-Laurinat | 0,02 | 29,5 |

| Beispiel | Polymer A aus Beispiel | Brandschutzadditiv | Menge | $O_2$-Index, % |
|---|---|---|---|---|
| 49 | A | Polyphenylensulfid gemäß EP-A 171021 der | 10 | 30,7 |
| 50 | C | Schmelzviskosität 53 Pa.s bei der | 10 | 32,2 |
| | | Scherrate τ 100 Pa bei 306°C | | |
| 51 | D | NaCl | 0,03 | 30,4 |
| 52 | A | $K_2HPO_4$ | 0,2 | 27,5 |
| 53 | A | $Li_2SO_4$ | 0,2 | 27,8 |
| 54 | A | $NaNO_3$ | 0,2 | 27,3 |
| 55 | A | ZnS | 0,5 | 28,7 |
| 56 | C | ZnS | 0,5 | 29,1 |
| 57 | A | NaHS | 0,2 | 28,3 |
| 58 | A | $Na_3B_4O_7$ | 0,2 | 27,9 |
| 59 | A | Polydimethylsiloxan der Viskosität | 7 | 29,6 |
| 60 | F | 170 000 mPas | 7 | 30,4 |
| 61 | A | Polysiloxan-Block-Co-Polycarbonat von | 50 | 29,2 |
| 62 | F | Beispiel 3 der DE-OS 3334782 | 50 | 30,7 |
| 63 | C | K-Salz der Perfluor-n-butansulfonsäure | 0,2 + 0,1 | 33,4 |
| | | + Polytetrafluorethylen von Beispiel 37 | | |

Mit * gekennzeichnete Beispiele dienen dem Vergleich

## Ansprüche

1. Mit Additiven und/oder Comonomeren brandwidrig ausgerüstete aromatische Polycarbonate, Polyestercarbonate und Polyester auf Basis von Dihydroxydiphenylcycloalkanen der Formel

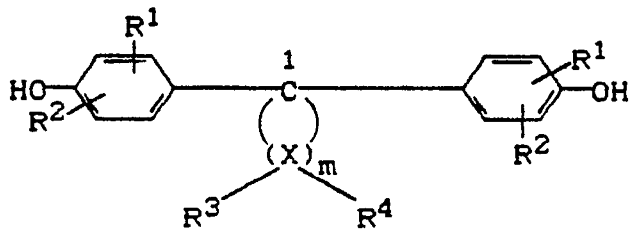

(I),

worin
$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$ für jedes X individuell wählbar, unabhängig voneinander Wasserstoff oder $C_1$-$C_6$-Alkyl
und
X Kohlenstoff bedeuten,
mit der Maßgabe, daß an mindestens einem Atom X $R^3$ und $R^4$ gleichzeitig Alkyl bedeuten.

2. Brandwidrig ausgerüstete aromatische Polycarbonate, Polyestercarbonate und Polyester gemäß Anspruch 1, auf Basis des Dihydroxydiphenylcycloalkans der Formel II

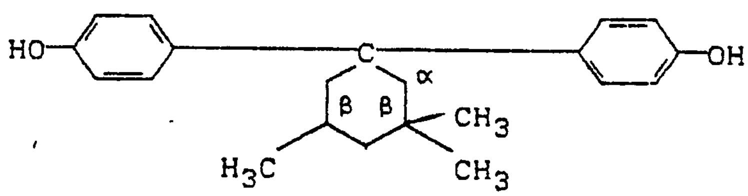

II

3. Brandwidrig ausgerüstete aromatische Polycarbonate, Polyestercarbonate und Polyester gemäß Anspruch 1, in denen mindestens 5 Gew.-% der Dihydroxydiphenylcycloalkane der Formel II entsprechen.

4. Brandwidrig ausgerüstete aromatische Polycarbonate, Polyestercarbonate und Polyester gemäß Anspruch 1, dadurch gekennzeichnet, daß Brandschutzadditive in Mengen von 0,001 bis 50 Gew.-% bzw Brandschutz-Comonomere in Mengen von 0,1 bis 50 Mol-% verwendet werden.